(19) Europäisches Patentamt
European Patent Office
Office européen des brevets

(11) Veröffentlichungsnummer: **0 213 329 B1**

(12) **EUROPÄISCHE PATENTSCHRIFT**

(45) Veröffentlichungstag der Patentschrift: **02.10.91**

(51) Int. Cl.⁵: **B04C** 3/00, B01F 5/00,
//F02M29/06,F02M19/03

(21) Anmeldenummer: **86109340.9**

(22) Anmeldetag: **08.07.86**

(54) Zerstäubungsvorrichtung.

(30) Priorität: 30.07.85 DE 8521902 U
30.07.85 DE 8521904 U

(43) Veröffentlichungstag der Anmeldung:
**11.03.87 Patentblatt 87/11**

(45) Bekanntmachung des Hinweises auf die
Patenterteilung:
**02.10.91 Patentblatt 91/40**

(84) Benannte Vertragsstaaten:
**AT BE CH DE FR GB IT LI LU NL SE**

(56) Entgegenhaltungen:
EP-A- 0 050 312     DE-A- 2 741 243
DE-B- 2 220 535     DE-C- 973 021
FR-A- 1 086 479     GB-A- 577 966
GB-A- 708 355       US-A- 1 525 249
US-A- 1 931 193     US-A- 2 487 633
US-A- 4 053 142     US-A- 4 464 314

(73) Patentinhaber: **Wolf, Hartmut**
**Schwimmbadstrasse 11**
**6145 Lindenfels 2(DE)**

Patentinhaber: **Czernawski, Norbert**
**Lessingstrasse 21**
**6140 Benzheim 3(DE)**

(72) Erfinder: **Wolf, Hartmut**
**Schwimmbadstrasse 11**
**6145 Lindenfels 2(DE)**
Erfinder: **Czernawski, Norbert**
**Lessingstrasse 21**
**6140 Benzheim 3(DE)**

(74) Vertreter: **Gossel, Hans K., Dipl.-Ing. Lorenz-**
**Seidler-Gossel et al**
**Widenmayerstrasse 23**
**W-8000 München 22(DE)**

## Beschreibung

Die Erfindung betrifft eine Zerstäubungsvorrichtung mit einer Wirbelkammer, die ein Gehäuse aufweist, dessen Mantel oder Seitenwände mindestens mit zwei Stutzen versehen sind, deren Mittellinien einen Abstand von der zu dieser etwa rechtwinkelig verlaufenden Gehäuseachse aufweisen, die in einer Umfangsrichtung gleichsinnig geneigt sind, wobei das Gehäuse an seinen Enden durch Stirnplatten oder -wände geschlossen ist, die die Gehäuseachse durchsetzen und wobei in einer Stirnpalte eine Eintrittsdüse und in der anderen ein Auslaßrohr angeordnet sind.

Es sind schon Wirbelkammern in unterschiedlichen Ausführungsformen bekannt, wobei der Stutzen einen Einlaßstutzen bildet, durch den das in die Wirbelkammer eintretende Medium, beispielsweise Flüssigkeiten oder Gase, zum Zwecke einer guten Verteilung oder des Abschleuderns von in diesem enthaltenen festen Partikeln (Zyklone) in eine kreisende Bewegung versetzt wird.

Eine gattungsgemäße Wirbelkammer ist bereits aus der GB-A-708 355 bekannt. Allerdings wird dort eine Wirbelkammer zum Dispergieren bzw. Lösen einer Substanz in einer Flüssigkeit beschrieben. Grundsätzlich läßt sich eine solche Vorrichtung auch für ein Dispergierproblem von Flüssigkeiten in Gasen einsetzen, wobei andere Betriebsparameter gewählt werden müssen. Durch die Zerstäubung oder Dispergierung der Flüssigkeit entsteht allerdings eine Tropfengrößenverteilung, wobei neben dem gewünschten feindispergierten Tropfen auch größere Tropfen statistisch vorkommen. Derartig große Tropfen sind bei vielen Anwendungen jedoch unerwünscht.

Aufgabe der Erfindung ist es nun, eine Zerstäubungsvorrichtung der eingangs angegebenen Art zu schaffen, mit der sich einerseits ein konvergierter Wirbel hoher Rotationsenergie aus dem in diese eingeleitetem Medium erzeugen läßt, der aus dieser in zentrierter Form austritt, wobei gewährleistet sein soll, daß zerstäubte Partikel nach ihrem spezifischen Gewicht bzw. ihrer Größe selektiv abgeschieden werden können.

Erfindungsgemäß wird diese Aufgabe bei einer Zerstäubungsvorrichtung der gattungsgemäßen Art dadurch gelöst, daß das Auslaßrohr als Eintrittsrohr in eine Schleuderkammer mündet, die etwa gleichachsig mit einem Auslaßrohr versehen ist, das die inneren Enden der Eintritts- und Austrittsrohre einen Abstand voneinander aufweisen und daß die Kammerwände den Bereich dieser inneren Enden im Abstand umgeben und daß die Kammer radial auswärts der Ein- und Auslaßrohre mit einem Auslaß- oder Abzugsrohr versehen ist.

Grundsätzlich sind derartige Schleuderkammern schon als Drehströmungswirbler zur Sichtung beispielsweise feinkörniger Partikel bekannt, wie beispielsweise in der DE-B-2 220 535 beschrieben. Bei diesen vorbekannten Vorrichtungen handelt es sich allerdings um einen gattungsfremden Stand der Technik, da es sich hier gerade nicht um eine Zerstäubungsvorrichtung handelt.

Bei der erfindungsgemäßen Zerstäubungsvorrichtung wird durch das Auslaßrohr der Wirbelkammer bzw. das Eintrittsrohr der Schleuderkammer ein durch die Stutzen eintretendes gasförmiges oder flüssiges Medium angesaugt. Dieses kann alternativ auch unter Druck in die Stutzen eingeleitet werden. Dieses wird dann in der Wirbelkammer in eine kreisende Bewegung versetzt, wobei sich aufgrund der gleichsinnigen Neigung der Stutzen ein Wirbel ausbildet, in dem sich die Winkelgeschwindigkeit des Mediums zur Drehachse hin vergrößert. In der erfindungsgemäßen Wirbelkammer bildet sich somit aus dem durch die Stutzen angesaugten oder in diese unter Druck eingeleitetem Medium ein wirbelnder Strahl aus, der sich selbst mit der Gehäuseachse der Wirbelkammer zentriert und in konvergierter Form aus dem Auslaßrohr austritt. Dieser konzentrierte wirbelnde Strahl mit hoher Rotationsenergie läßt sich zu unterschiedlichen Zwecken verwenden, wie nachstehend noch näher ausgeführt werden wird.

Wird durch die Eintrittsdüse beispielsweise Brennstoff in die Wirbelkammer eingespritzt, wird dieser vom Wirbel mitgenommen und in feinster Weise zerstäubt, so daß sich die Wirbelkammer als Vergaser einer Brennkraftmaschine oder als Zerstäuber eines Brenners oder eines Düsentriebwerks verwenden läßt. Durch die Eintrittsdüse läßt sich Brennstoff sowohl in flüssiger als auch in staubförmiger Form, beispielsweise in Form von Kohlestaub, einleiten.

Tritt durch die Stutzen beispielsweise staubbeladene Luft in die Wirbelkammer ein, können die Staubpartikel zur Luftreinigung durch durch die Eintrittsdüse eingespeistes Wasser gebunden und durch nachfolgendes Ausschleudern entfernt werden.

Das Zusatzmedium kann unter Druck durch die Eintrittsdüse eingespeist oder aber auch aufgrund eines in der Wirbelkammer herrschenden Unterdrucks angesaugt werden.

Auf die Eintrittsdüse kann unter Umständen auch ganz verzichtet werden, wenn durch die Stutzen beispielsweise unterschiedliche Medien eingeleitet werden, die sich in dem durch diese erzeugten Wirbel mischen. Durch entsprechende Anordnung der Stutzen läßt sich auch erreichen, daß unterschiedliche, durch diese eingeleitete Komponenten weitgehend unvermischt in verdrallter Form in dem Wirbel erhalten bleiben.

In der Wirbelkammer wird ein sich zu deren Achse hin konzentrierender Wirbel ausgebildet, dessen Winkelgeschwindigkeit theoretisch zur Wirbelachse hin unendlich groß werden kann, so daß sich im Bereich der Wirbelachse eine Reibung der in Rotation versetzten Partikel und möglicherweise auch Moleküle ausbildet, die zu einer molekularfeinen Zerstäubung der Partikel führt und möglicherweise sogar ein Zerreißen von Molekularbindungen des in Rotation versetzten Stoffes zur Folge haben kann.

Erfindungsgemäß ist der Wirbelkammer die oben näher bezeichnete Schleuderkammer nachgeschaltet, die durch die die inneren Enden des Eintritts- und Auslaßrohrs umgebende Kammer gebildet wird. In die Schleuderkammer tritt der in der Wirbelkammer gebildete mit hoher Drehgeschwindigkeit wirbelnde Strahl ein, wobei er zwischen den inneren Enden der Rohre frei durch diese hindurchtritt. Zwischen den inneren Enden des Eintritts- und Auslaßrohres bildet sich somit in der Schleuderkammer ein in dieser stehender Wirbel aus, aus dem randnähere Partikel ausgeschleudert werden. Bei diesen handelt es sich um größere bzw. schwerere Partikel.

Der Mantel der Wirbelkammer kann auch konusförmig ausgebildet sein und zu dem Auslaßrohr hin konvergieren, so daß er der Form des sich in der Wirbelkammer ausbildenden Wirbels weitgehend angepaßt ist.

Zweckmäßigerweise fluchten die Mittellinien der Eintrittsdüse und des Auslaßrohrs mit der Gehäuseachse.

Die Stutzen sind zweckmäßigerweise in gleichen Winkelabständen über die Seitenwände oder den Mantel verteilt.

Die Mittellinien der Stutzen schließen zweckmäßigerweise mit mit die Gehäuseachse schneidenden radialen Strahlen gleiche Winkel ein, so daß sich ein möglichst gleichmäßiger Wirbel ausbildet. Zur Erzielung unterschiedlicher Effekte sind allerdings auch ungleiche Winkel möglich.

Zweckmäßigerweise durchsetzen die Stutzen etwa tangential den Gehäusemantel, was eine gute Wirbelbildung begünstigt.

Die Mittellinien der Stutzen können in einer gemeinsamen, die Gehäuseachse schneidenden Mittelebene liegen. Diese sollte zweckmäßigerweise gleichzeitig die Quermittelebene des Gehäuses sein.

Liegen die Mittellinien der Stutzen in zueinander versetzten Querebenen, kann die Ausbildung miteinander verdrallter Ströme der eingeleiteten Medien begünstigt werden. Die Mittellinien der Stutzen können schräg in Richtung auf das Auslaßrohr verlaufen und in ihrer Projektion auf die Gehäuseachse mit dieser gleiche spitze Winkel einschließen. Eine derartige Anordnung der Stutzen kann zweckmäßig sein, wenn das durch diese eingeleitete Medium nicht durch das Auslaßrohr angesaugt, sondern in diese unter Druck eingeleitet wird. Zweckmäßigerweise sind nur zwei Stutzen vorgesehen.

Zweckmäßigerweise sind die Wände der Schleuderkammer rotations-symmetrisch zu ihrer mit den Mittellinien des Eintritts- und Auslaßrohres fluchtenden Längsachse ausgebildet. Die Schleuderkammer kann beispielsweise birnenförmig ausgebildet sein, wobei am Ende des langgestreckteren Teils das Austrittsrohr angeordnet ist.

Der Querschnitt der Schleuderkammer mit größtem Durchmesser liegt zweckmäßigerweise im Bereich zwischen den inneren Enden des Eintritts- und Austrittsrohres.

In weiterer Ausgestaltung der Erfindung ist vorgesehen, daß mindestens das Einlaß- oder Auslaßrohr zur Veränderung des Abstandes der inneren Enden dieser Rohre in einer Öffnung der Schleuderkammer axial verschieblich geführt ist. Durch Veränderung des Abstandes der inneren Enden der Rohre läßt sich die Breite und Größe des sich in der Schleuderkammer ausbildenden Wirbels verändern. Durch diese Veränderung läßt sich auch die Menge der aus dem stehenden Wirbel abgeschleuderten Partikel beeinflussen. Ist also die Schleuderkammer beispielsweise Teil eines Vergasers, läßt sich durch die Veränderung des Abstandes der inneren Enden der Rohre die Fettigkeit des Gemisches einstellen.

Wird die Schleuderkammer dazu verwendet, Partikel bestimmten spezifischen Gewichts oder bestimmter Größe abzuscheiden, kann der Durchmesser des Eintrittsrohres entsprechend größer als der des Auslaßrohres ausgebildet werden.

Um die Form des sich in der Schleuderkammer ausbildenden Wirbels günstig zu beeinflussen, kann der Endbereich des Eintrittsrohrs düsenartig erweitert sein.

In weiterer Ausgestaltung der Erfindung ist vorgesehen, daß mehrere Schleuderkammern gleicher Art hintereinandergeschaltet sind und die Auslaßrohre der jeweils vorgeschalteten Kammern die Eintrittsrohre der jeweils folgenden Kammern bilden. Diese Ausgestaltung ermöglicht eine selektive Abscheidung ausgeschleuderter Partikel nach ihrem spezifischen Gewicht und/oder ihrer Größe. Zweckmäßigerweise nehmen die Durchmesser der Austrittsrohre der nachgeschalteten Kammern dabei kontinuierlich ab.

Die erfindungsgemäße Zerstäubungsvorrichtung läßt sich als Vergaser, Luftreiniger oder auch Luftbefeuchter verwenden, wenn durch die Eintrittsdüse Wasser zur Luftbefeuchtung zugesetzt wird.

Die erfindungsgemäße Zerstäubungsvorrichtung kann auch als Ölbrenner, Brenner für Kohlestaub, oder als Brenner für Holzstaub verwendet werden. Sie kann auch als Absorptionsanlage für Ruß und als Staubfilter eingesetzt werden. Schließlich vermag sie in Kläranlagen oder in Raffinierungsanlagen Verwendung zu finden. Mit den erfindungsgemäßen Vorrichtung lassen sich Emulsionen und Gemische herstellen und diese auch wieder trennen.

Ausführungsbeispiele der Erfindung werden nachstehend anhand der Zeichnung naher erläutert. In dieser zeigen

Fig. 1     eine Seitenansicht der Wirbelkammer,

Fig. 2     einen Schnitt durch die Wirbelkammer längs der Linie A - B in Fig. 1,

Fig. 3     eine Draufsicht auf die mit dem Auslaßrohr versehene Stirnseite der Wirbelkammer nach Fig. 1,

Fig. 4     eine Draufsicht auf die mit der Eintrittsdüse versehene Stirnseite der Wirbelkammer nach Fig. 1,

Fig. 5     einen Längsschnitt durch eine der Wirbelkammer nach Fig. 1 nachgeschaltete Schleuderkammer,

Fig. 6     einen Querschnitt durch die Schleuderkammer nach Fig. 5,

Fig. 7     einen der Fig. 5 entsprechenden Längsschnitt durch die Schleuderkammer in vergrößerter Darstellung,

Fig. 8     einen Langsschnitt durch einen aus einer Wirbelkammer mit nachgeschalteter Schleuderkammer bestehenden Vergaser für eine Brennkraftmaschine,

Fig. 9     einen Längsschnitt durch eine Zweikomponentenwirbelstromvergaseranlage,

Fig. 10     einen Längsschnitt durch einen Ölbrenner,

Fig. 11     einen Querschnitt durch eine Luftbefeuchtungs-, Reinigungs- und Entstaubungsanlage,

Fig. 12     einen Längsschnitt durch eine schematische Darstellung einer Kläranlage,

Fig. 13     einen Längsschnitt durch eine schematische Darstellung einer Raffinierungsanlage und

Fig. 14     einen Längsschnitt durch eine schematische Darstellung einer Rauchgasentgiftungsanlage.

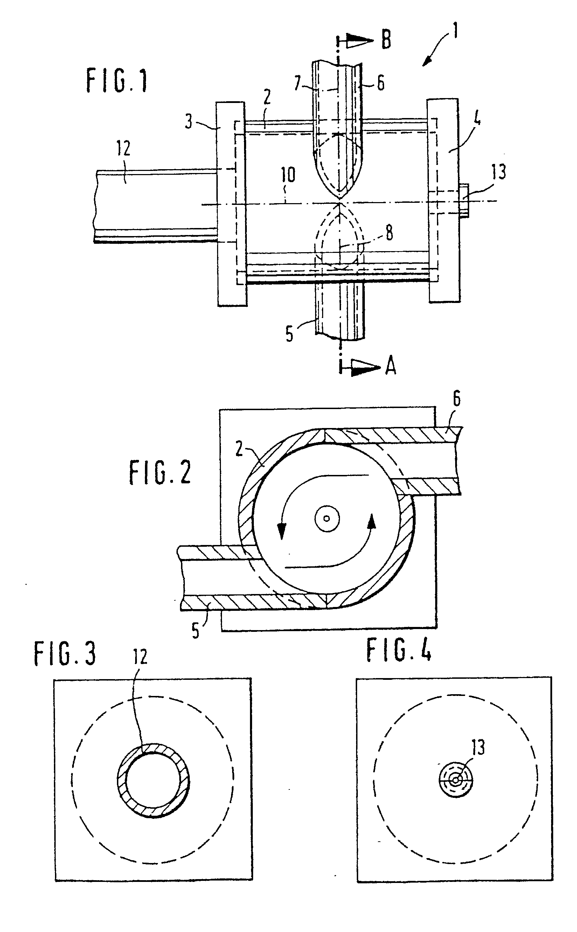

Die Wirbelkammer 1 nach den Fig. 1 bis 4 besteht aus einem zylindrischen Rohrstück 2, das endseitig durch mit diesem verbundene Stirnplatten 3, 4 geschlossen ist. In der Quermittelebene des den Gehäusemantel der Wirbelkammer 1 bildenden Rohrstücks 2 sind um 180° versetzt mit diesem Rohrstutzen 5, 6 verbunden. Die Rohrstutzen münden in der aus Fig. 2 ersichtlichen Weise tangential in die Wirbelkammer ein. Aufgrund der um 180° versetzten Anordnung der Rohrstutzen 5, 6 verlaufen deren Mittellinien 7, 8 parallel zueinander. Wie aus Fig. 1 ersichtlich ist, kreuzen die Mittellinien 7, 8 der Rohrstutzen 5, 6 die Mittelachse 10 der Wirbelkammer 1 rechtwinkelig.

Die Stirnplatte 3 der Wirbelkammer 1 ist mit dem Austrittsrohr 12 versehen. In der gegenüberliegenden Stirnplatte 4 ist die Eintrittsdüse 13 angeordnet. Die Mittellinien des Austrittsrohrs 12 und der Eintrittsdüse 13 fluchten mit der Mittelachse 10 des Gehäuses der Wirbelkammer.

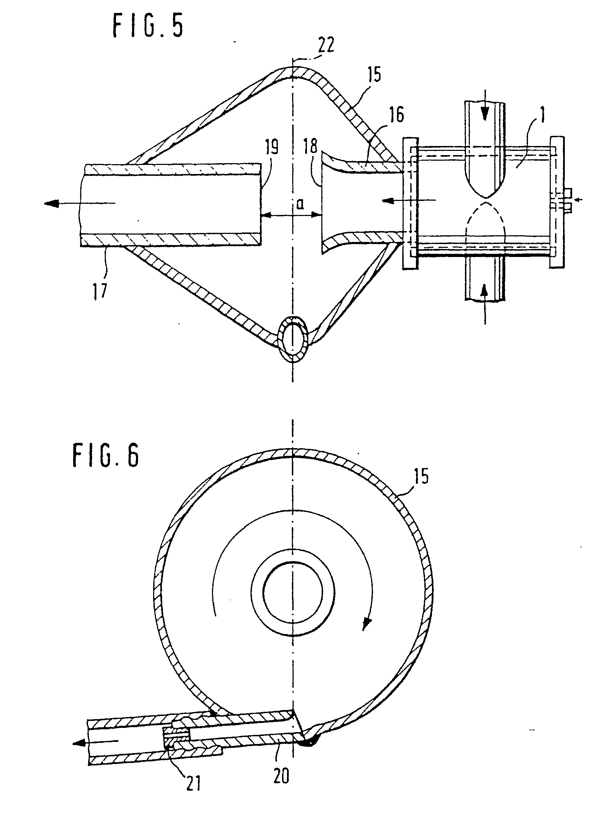

Anhand der Fig. 5 bis 7 wird nun die Schleuderkammer erläutert. Diese besteht aus einem rotationssymmetrischen, etwa birnenförmigen Gehäuse 15. Dieses ist auf einer Seite mit dem Eintrittsrohr 16 und auf der anderen Seite mit dem Austrittsrohr 17 versehen. Das Eintritts- und Austrittsrohr 17 sind konzentrisch zur Mittelachse der Schleuderkammer 15 in deren entsprechenden endseitigen Öffnungen dichtend angeordnet. Dabei ist das Eintrittsrohr 16 durch das Austrittsrohr der Wirbelkammer 1 gebildet.

Im Innern der Schleuderkammer 15 weisen die inneren Enden 18, 19 des Eintrittsrohrs 16 und des Austrittsrohrs 17 einen vorbestimmten Abstand a voneinander auf. Zwischen den inneren Enden 18, 19 der Rohre 16, 17 hat die Schleuderkammer 15 ihren Querschnitt 20 mit größtem Durchmesser. Im Bereich ihres größten Durchmessers weist die Schleuderkammer 15 im Längsschnitt eine gekrümmte Kontur auf. Ausgehend von dem Bereich mit größtem Durchmesser nimmt die Schleuderkammer 15 in ihrem Durchmesser sowohl zu dem Eintrittsrohr 16 als auch zu dem Austrittsrohr 17 hin ab, und zwar zu dem Eintrittsrohr 16 hin stärker als zu dem Austrittsrohr 17.

Im Bereich ihres Querschnitts mit größtem Durchmesser ist die Schleuderkammer 15 mit einem etwa tangential angeordneten Auslaßrohr 20 versehen. In diesem Auslaßrohr 20 kann eine Ventil- oder eine Drosselstelle 21 vorgesehen sein.

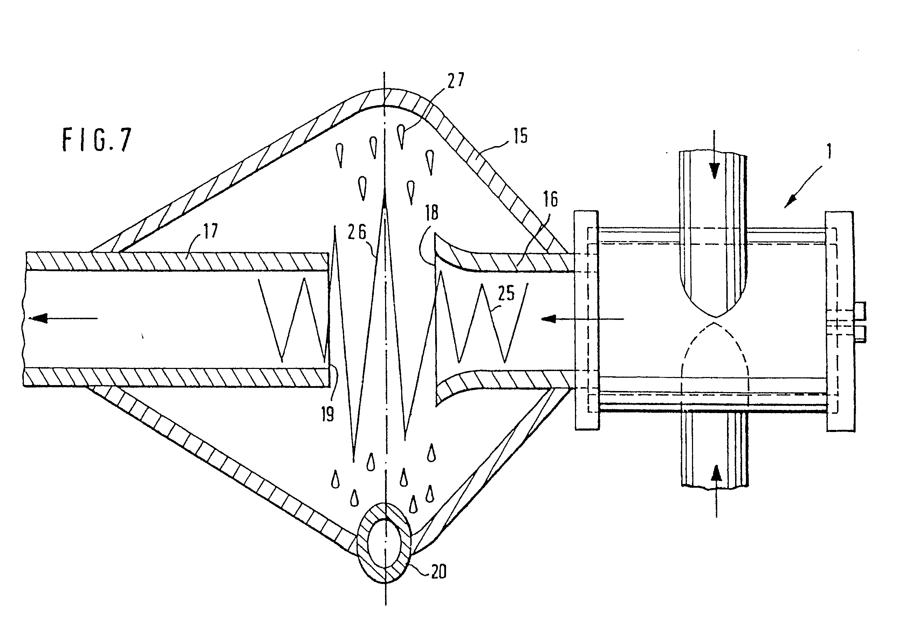

Tritt in der aus Fig. 7 ersichtlichen Weise in die Schleuderkammer 15 durch das Eintrittsrohr 16 ein wirbelnder Strahl 25 ein, kann sich dieser zwischen den inneren Enden 18, 19 der Rohre 16, 17 zu einem Wirbel größeren Durchmessers 26 ausweiten. Randnahe Partikel 27 werden aus dem Wirbel ausgeschleudert und können durch das Abzugsrohr 20 abgezogen werden.

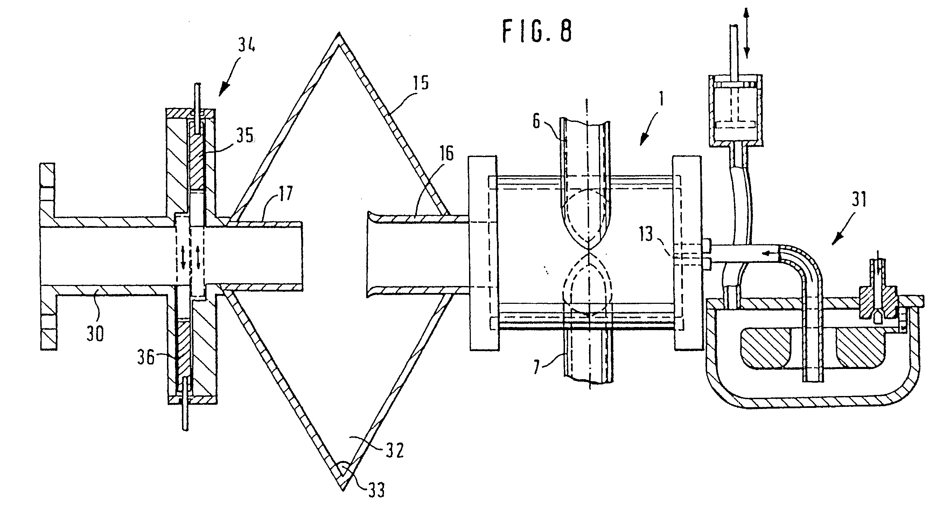

Anhand der Fig. 8 bis 14 werden nun einige Anwendungsbeispiele der Vorrichtung nach den Fig. 1 bis 7 kurz erläutert:

Fig. 8 zeigt die Anordnung der Wirbelkammer 1 und der mit dieser verbundenen Schleuderkammer 15 in einer Einkomponenten-Wirbelstromvergaseranlage. Durch das Rohr 30 wird von einem Verbrennungsmotor Gemisch angesaugt. Aufgrund des dadurch entstehenden Unterdrucks tritt durch die Stutzen 6, 7 in die Wirbelkammer 1 Luft ein, die einen konvergierenden Wirbel bildet. Durch die Düse 13 wird in den konvergierenden wirbelnden Luftstrahl durch eine Kraftstoffzuführungseinrichtung 31 Kraftstoff eingeleitet, der in dem wirbelnden Luftstrahl feinst zerstäubt wird.

Der wirbelnde Brennstoff-Luftstrahl tritt sodann durch das Rohr 16 in die Wirbelkammer 15 ein. In dieser werden größere Flüssigkeitströpfchen abgeschleudert, die sich in dem Bereich 32 der Schleuderkammer 15 mit größtem Durchmesser sammeln und durch das Abzugsrohr 33 abgezogen werden. Der abgezogene Brennstoff wird sodann durch nicht dargestellte Leitungen zurückgeführt und wieder durch die Düse 13 eingespeist.

Im Austrittsrohr 17 ist eine Drosseleinrichtung 34 angeordnet, durch die sich der Austrittsquerschnitt des Austrittsrohres 34 stufenlos einstellen läßt. Im dargestellten Ausführungsbeispiel besteht die Drosseleinrichtung aus zwei Schiebern 35, 36, die mit einander überlappenden winkeligen Ausschnitten versehen sind, so daß sich durch gegensinniges Verschieben der Schieber eine quadratische Durchtrittsöffnung veränderlicher Größe ergibt. Die Drosselstelle könnte auch durch eine Irisblende gebildet werden.

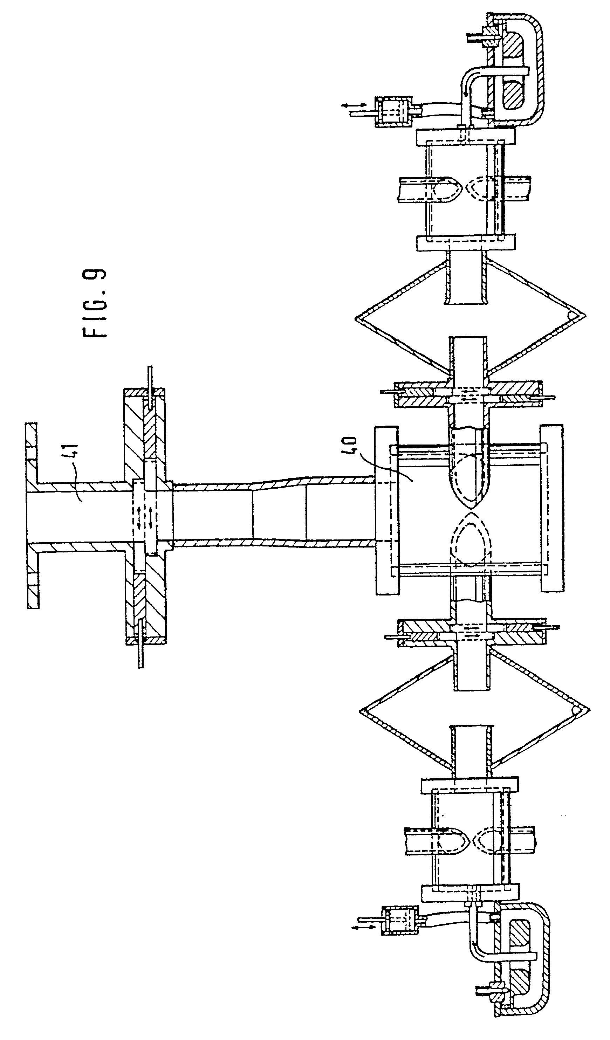

Fig. 9 zeigt eine Zweikomponenten-Wirbelstromvergaseranlage, bei der zwei Wirbelstromvergaseranlagen der anhand der Fig. 8 beschriebenen Art mit einer weiteren Wirbelkammer 40 verbunden sind, aus der das in einem verwirbelten Strahl vorliegende Gemisch durch das Saugrohr 41 abgesaugt wird.

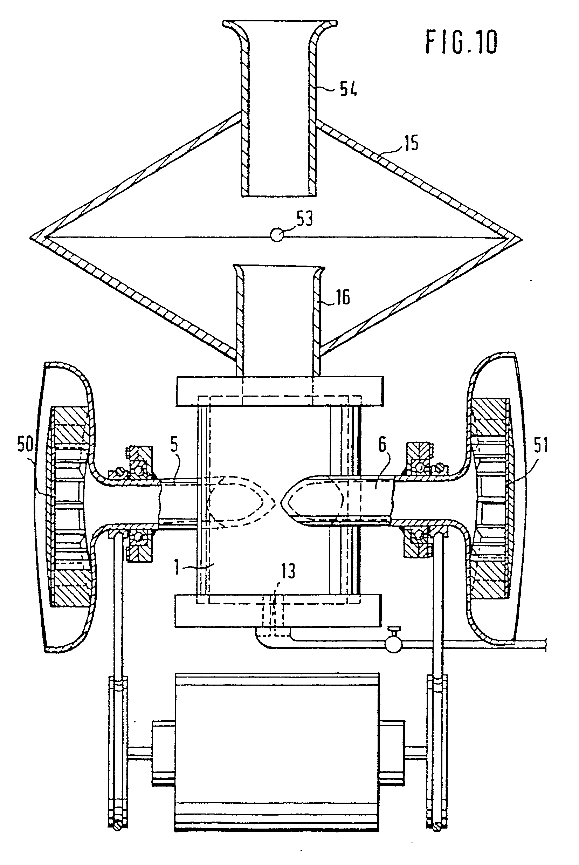

Fig. 10 zeigt das Konzept eines Ölbrenners, bei dem zwei Radialgebläse 50, 51 vorgesehen sind, die durch die Stutzen 5, 6 Luft in die Wirbelkammer 1 einblasen. Durch die Düse 13 eingespritzter Brennstoff wird in dem Luftwirbel zerstäubt und tritt durch das Rohr 16 in die Schleuderkammer 15 ein. Ausgeschleuderte Brennstofftröpfchen werden durch den Auslaß 53 abgezogen und zurückgeführt. Der verwirbelte Luft-Brennstoffstrahl wird durch das Rohr 54 dem Brenner zugeführt.

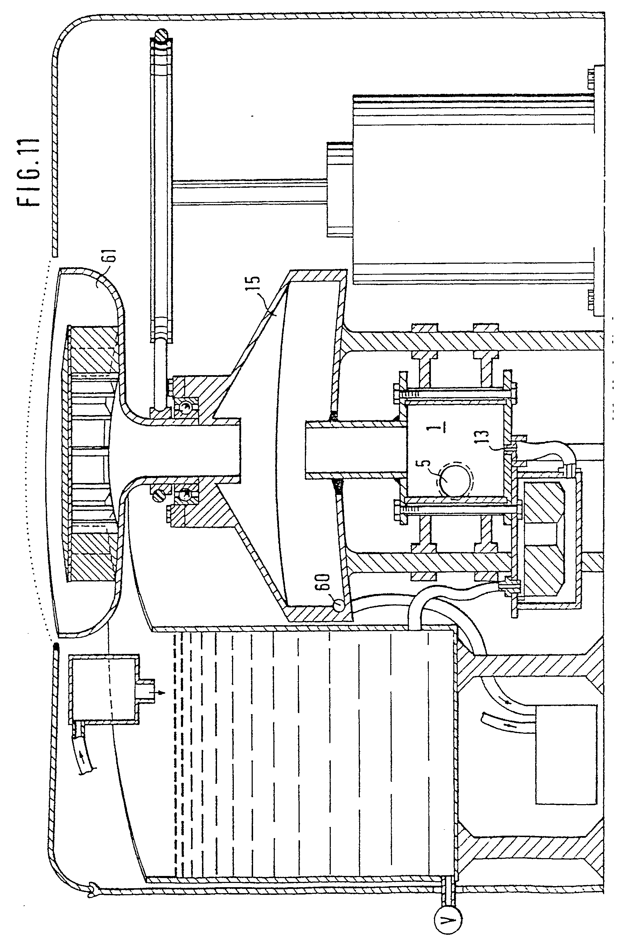

Fig. 11 zeigt schematisch eine Luftbefeuchtungs-, Reinigungs- und Entstaubungsanlage. Durch die Ansaugstutzen, von denen in der Schnittdarstellung nur der Stutzen 5 ersichtlich ist, tritt aufzubereitende Luft in die Wirbelkammer 1 ein. Über die Düse 13 wird der zu reinigenden und zu befeuchtenden Luft Wasser zugesetzt. Das Wasser wird in dem wirbelnden Luftstrahl feinst zerstäubt und tritt in die Schleuderkammer 15 ein. In dieser werden durch das eingespritzte Wasser gebundene Staubteilchen ausgeschleudert und durch den Abzugskanal 60 abgezogen. Die befeuchtete und gereinigte Luft wird durch das Gebläse 61 angesaugt und ausgeblasen.

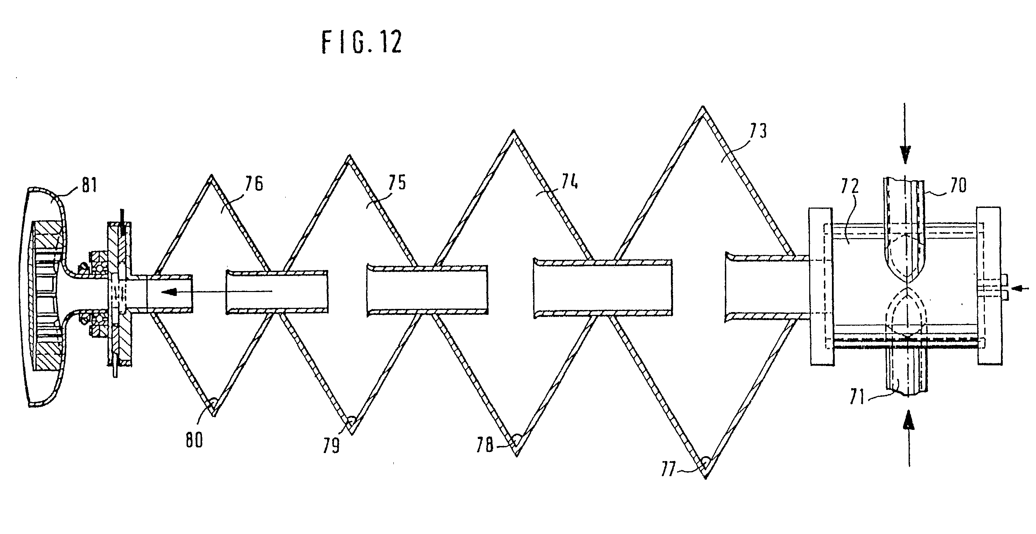

Fig. 12 zeigt das Schema einer Klär- oder Edelwasser-Gewinnungsanlage. Das zu reinigende Wasser wird durch die Stutzen 70, 71 in die Wirbelkammer 72 eingeleitet. In den nachgeschalteten Schleuderkammern 73 bis 76 werden auszuscheidende schwerere Partikel abgeschleudert und durch die Abzugsleitungen 77 bis 80 abgezogen. Das zu reinigende Wasser wird von einer Kreiselpumpe 81 angesaugt.

Der in der Wirbelkammer 72 erzeugte wirbelnde Strahl setzt sich bis in das Austrittsrohr der letzten Schleuderkammer 76 fort.

Aufgrund der zunehmenden Verringerung der Durchmesser der Austrittsrohre der Schleuderkammern erfolgt in diesen ein selektives Abscheiden der auszuscheidenden Stoffe.

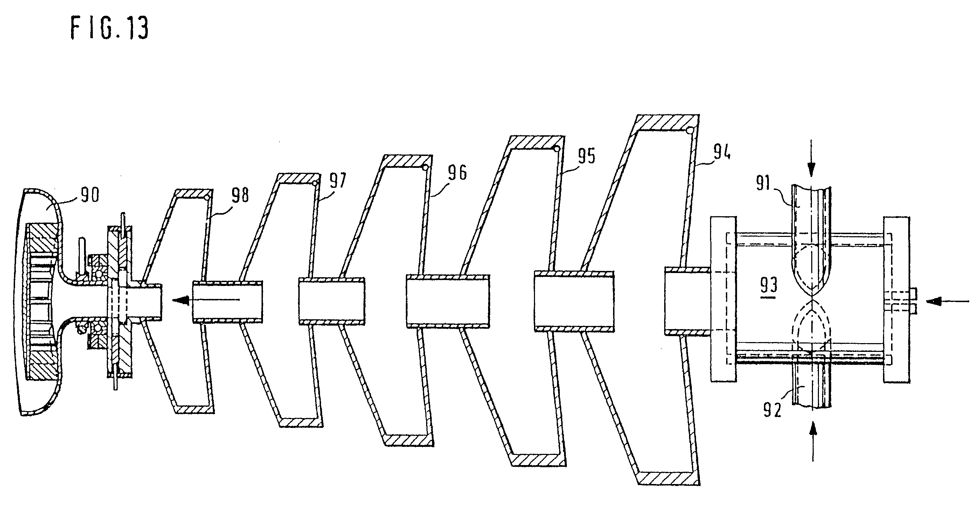

Fig. 13 zeigt das Schema einer Raffinierungsanlage. Die zu raffinierende Flüssigkeit wird durch die Kreiselpumpe 90 angesaugt und tritt durch die Stutzen 91, 92 in die Wirbelkammer 93 ein. In den Schleuderkammern 94 bis 98 erfolgt eine selektive Trennung der zu raffinierenden Stoffe.

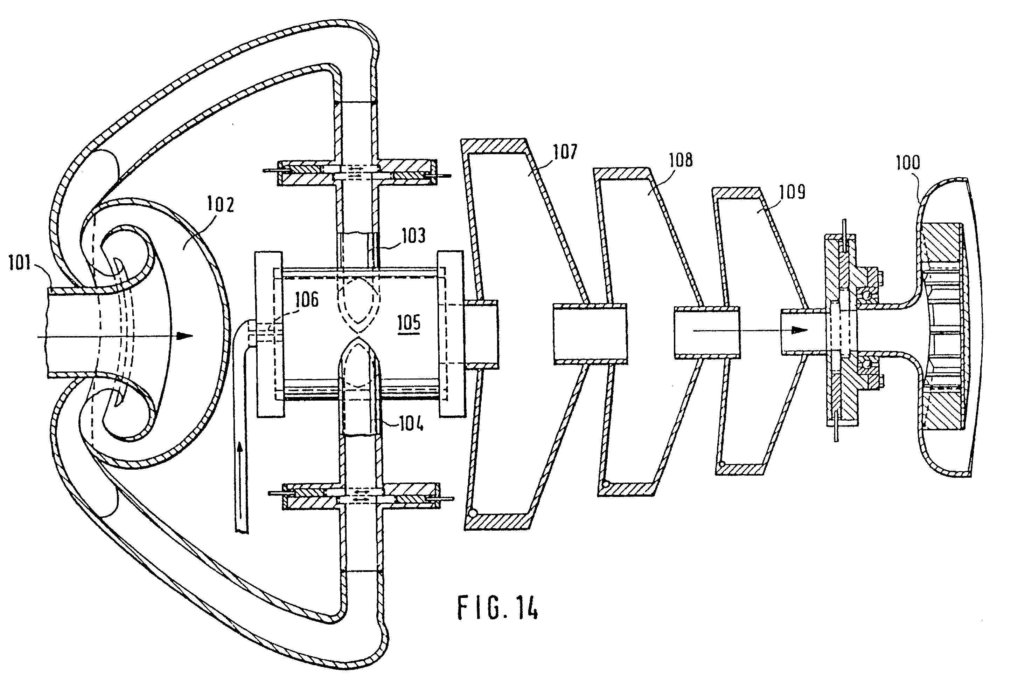

Fig. 14 zeigt schematisch den Aufbau einer Wirbelstromabsorptionsanlage zur Rauchgasentgiftung. Das zu reinigende Rauchgas wird durch den Lüfter 100 angesaugt und tritt über das Ansaugrohr 101 in eine Zentrifugalkammer 102 ein, in der bereits gröbere Staubteilchen abgeschleudert werden. Das Rauchgas wird sodann über die Stutzen 103, 104 angesaugt und tritt über einstellbare Drosselstellen in die Wirbelkammer 105 ein. Durch die Düse 106 wird eine Flüssigkeit, vorzugsweise Wasser, eingespritzt, die Staub und auszuwaschende Gase bindet. In den nachgeschalteten Schleuderkammern 107 bis 109 erfolgt eine selektive Trennung der auszuscheidenden Rauchgasbestandteile, so daß durch das Gebläse 100 gereinigtes und entgiftetes Rauchgas abgeblasen wird.

**Patentansprüche**

1.  Zerstäubungsvorrichtung mit einer Wirbelkammer, die ein Gehäuse aufweist, dessen Mantel (2) oder Seitenwände mindestens mit zwei Stutzen (5, 6) versehen sind, deren Mittellinien einen Abstand von der zu dieser etwa rechtwinkelig verlaufenden Gehäuseachse aufweisen, die in einer Umfangsrichtung gleichsinnig geneigt sind, wobei das Gehäuse an seinen Enden durch Stirnplatten (3, 4) oder -wände geschlossen ist, die die Gehäuseachse (10) durchsetzen und wobei in einer Stirnplatte (4) eine Eintrittsdüse (13) und in der anderen (3) ein Auslaßrohr (12) angeordnet ist,

    **dadurch gekennzeichnet,**

    daß das Auslaßrohr als Eintrittsrohr (16) in eine Schleuderkammer (15) mündet, die etwa gleichachsig mit einem Auslaßrohr (17) versehen ist, daß die inneren Enden (18, 19) der Eintritts- und Austrittsrohre (16, 17) einen Abstand (a) voneinander aufweisen und daß die Kammerwände den Bereich dieser inneren Enden (18, 19) mit Abstand umgeben und daß die Kammer (15) radial auswärts der Ein- und Auslaßrohre mit einem Auslaß- oder Abzugsrohr (20) versehen ist.

2. Zerstäubungsvorrichtung nach Anspruch 1, dadurch gekennzeichnet, daß der Mantel (2) zylindrisch ausgebildet ist.

3. Zerstäubungsvorrichtung nach Anspruch 1, dadurch gekennzeichnet, daß der Mantel konusförmig ausgebildet ist und zu dem Auslaßrohr (12) hin konvergiert.

4. Zerstäubungsvorrichtung nach einem der Ansprüche 1-3, dadurch gekennzeichnet, daß die Mittellinien der Eintrittsdüse (13) und des Auslaßrohrs (12) mit der Gehäuseachse (10) fluchtet.

5. Zerstäubungsvorrichtung nach einem der Ansprüche 1-4, dadurch gekennzeichnet, daß die Stutzen (5, 6) in gleichen Winkelabständen über die Seitenwände oder den Mantel (2) verteilt sind.

6. Zerstäubungsvorrichtung nach einem der Ansprüche 1-5, dadurch gekennzeichnet, daß die Mittellinien der Stutzen (5, 6) mit mit die Gehäuseachse (10) schneidenden radialen Linien gleiche Winkel einschließen.

7. Zerstäubungsvorrichtung nach einem der Ansprüche 1-6, dadurch gekennzeichnet, daß die Stutzen (5, 6) etwa tangential den Gehäusemantel (2) durchsetzen.

8. Zerstäubungsvorrichtung nach einem der Ansprüche 1-7, dadurch gekennzeichnet, daß die Mittellinien der Stutzen (5, 6) in einer gemeinsamen, die Gehäuseachse (10) schneidenden Mittelebene liegen.

9. Zerstäubungsvorrichtung nach einem der Ansprüche 1-8, dadurch gekennzeichnet, daß die Stutzen (5, 6) im Bereich der Quermittelebene des Gehäuses münden.

10. Zerstäubungsvorrichtung nach einem der Ansprüche 1-8, dadurch gekennzeichnet, daß die Mittellinien der Stutzen in zueinander versetzten Querlinien liegen.

11. Zerstäubungsvorrichtung nach einem der Ansprüche 1-10, dadurch gekennzeichnet, daß die Mittellinien der Stutzen schräg in Richtung auf das Auslaßrohr (12) verlaufen und in ihrer Projektion auf die Gehäuseachse mit dieser gleiche spitze Winkel einschließen.

12. Zerstäubungsvorrichtung nach einem der Ansprüche 1-11, dadurch gekennzeichnet, daß zwei Stutzen (5, 6) vorgesehen sind.

13. Zerstäubungsvorrichtung nach einem der Ansprüche 1-12, dadurch gekennzeichnet, daß die Kammerwände rotations-symmetrisch zu ihrer mit den Mittellinien der Ein- und Auslaßrohre fluchtenden Längsachse ausgebildet sind.

14. Zerstäubungsvorrichtung nach einem der Ansprüche 1-13, dadurch gekennzeichnet, daß der Querschnitt der Kammer (15) mit größtem Durchmesser im Bereich zwischen den inneren Enden (18, 19), der Ein- und Auslaßrohre (16, 17) liegt.

15. Zerstäubungsvorrichtung nach einem der Ansprüche 1-14, dadurch gekennzeichnet, daß der Durchmesser der Kammer (15) ausgehend von dem Querschnitt mit größtem Durchmesser beidseitig ständig zu den Einlaß- und Auslaßrohren hin abnimmt.

16. Zerstäubungsvorrichtung nach einem der Ansprüche 1-15, dadurch gekennzeichnet, daß sich der Auslaß (20) im Bereich des Querschnitts mit dem größten Durchschnitt der Kammer (15) befindet.

17. Zerstäubungsvorrichtung nach einem der Ansprüche 1-15, dadurch gekennzeichnet, daß mindestens eines der Einlaß- und Auslaßrohre (16, 17) zur Veränderung des Abstandes (a) der inneren Enden (18, 19) der Rohre in einer Öffnung der Kammer (15) axial verschieblich geführt ist.

18. Zerstäubungsvorrichtung nach einem der Ansprüche 1-17, dadurch gekennzeichnet, daß der Durchmesser des Eintrittsrohres (16) größer ist als der des Auslaßrohres (17).

19. Zerstäubungsvorrichtung nach einem der Ansprüche 1-18, dadurch gekennzeichnet, daß sich der Endbereich des Eintrittsrohres (16) düsenartig erweitert.

20. Zerstäubungsvorrichtung nach einem der Ansprüche 1-19, dadurch gekennzeichnet, daß mehrere Kammern gleicher Art hintereinander geschaltet sind und daß die Auslaßrohre der jeweils vorgeschalteten Kammern die Eintrittsrohre der jeweils nachgeschalteten Kammern bilden.

21. Zerstäubungsvorrichtung nach Anspruch 20, dadurch gekennzeichnet, daß die Durchmesser der Austrittsrohre der nachgeschalteten Kammern kontiunierlich abnehmen.

22. Zerstäubungsvorrichtung nach einem der Ansprüche 1-21 als Vergaser einer Brennkraftmaschine oder als Zerstäuber eines Brenners oder eines Düsentriebwerks.

## Claims

1. An atomizing apparatus with a swirl chamber having a casing whose peripheral surface (2) or side walls are provided with at least two connection pipes (5, 6) whose median lines are disposed at a distance from this casing axis which extends approximately at right angles to them, which have the same inclination in a peripheral direction, wherein the casing is closed at its ends by end plates (3, 4) or end walls passing through the casing axis (10), and wherein in one end plate (4) provision is made for an inlet nozzle (13) and in the other end plate (3) for an outlet pipe (12),

characterized in that

the outlet pipe issued as an inlet pipe (16) in an extraction chamber (15) provided in approximately the same direction with an outlet pipe (17), in that the inner ends (18, 19) of the inlet and outlet pipes (16, 17) are disposed at a distance (a) from each other, and in that the chamber walls surround the region of these inner ends (18, 19) at a distance, and in that the chamber (15) is provided radially outwards from the inlet and outlet pipes with an outlet pipe or drain pipe (20).

2. An atomizing apparatus according to claim 1, characterized in that the peripheral surface (2) has a cylindrical design.

3. An atomizing apparatus according to claim 1, characterized in that the peripheral surface has a conical design and converges towards the outlet pipe (12).

4. An atomizing apparatus according to one of claims 1 to 3, characterized in that the median lines of the inlet nozzle (13) and of the outlet pipe (12) are aligned with the casing axis (10).

5. An atomizing apparatus according to one of claims 1 to 4, characterized in that the connection pipes (5, 6) are distributed at equal angular distances over the side walls or the peripheral surface (2).

6. An atomizing apparatus according to one of claims 1 to 5, characterized in that the median lines of the connection pipes (5, 6) form equal angles with radial lines intersecting the casing axis (10).

7. An atomizing apparatus according to one of claims 1 to 6, characterized in that the connection pipes (5, 6) pass through the peripheral surface (2) approximately tangentially.

8. An atomizing apparatus according to one of claims 1 to 7, characterized in that the median lines of the connection pipes (5, 6) lie in a common median plane intersecting the casing axis (10).

9. An atomizing apparatus according to one of claims 1 to 8, characterized in that the connection pipes (5, 6) issue in the region of the transverse median plane of the casing.

10. An atomizing apparatus according to one of claims 1 to 8, characterized in that the median lines of the connection pipes (5, 6) lie in transverse lines offset with respect to each other.

11. An atomizing apparatus according to one of claims 1 to 10, characterized in that the median lines of the connection pipe extend slantingly towards the outlet pipe (12) and form in their projection onto the casing axis, equal acute angles therewith.

12. An atomizing apparatus according to one of claims 1 to 11, characterized in that provision is made for two connection pipes (5, 6).

13. An atomizing apparatus according to one of claims 1 to 12, characterized in that the chamber walls are designed to be in rotational symmetry with respect to their longitudinal axis aligned with the median lines of the inlet and outlet pipes.

14. An atomizing apparatus according to one of claims 1 to 13, characterized in that the cross section of the chamber (15) lies with its greatest diameter in the region between the inner ends (18, 19) of the inlet and outlet pipes (16, 17).

**15.** An atomizing apparatus according to one of claims 1 to 14, characterized in that, starting from the cross section with the largest diameter, the diameter of the chamber (15) steadily decreases on both sides towards the inlet and outlet pipes.

**16.** An atomizing apparatus according to one of claims 1 to 15, characterized in that the outlet (20) is disposed in the zone of the cross section with the largest diameter of the chamber (15).

**17.** An atomizing apparatus according to one of claims 1 to 15, characterized in that at least one of the inlet and outlet pipes (16, 17) is carried for axial displacement in an opening of the chamber (15), in order to modify the distance (a) between the inner ends (18, 19).

**18.** An atomizing apparatus according to one of claims 1 to 17, characterized in that the diameter of the inlet connection pipe (16) is larger than that of the outlet pipe (17).

**19.** An atomizing apparatus according to one of claims 1 to 18, characterized in that the end zone of the inlet pipe (16) is widened in the manner of a nozzle.

**20.** An atomizing apparatus according to one of claims 1 to 19, characterized in that several chambers of the same kind are disposed in series, and in that the outlet pipes of the respective leading chambers form the inlet pipe of the respective following chambers.

**21.** An atomizing apparatus according to one of claims 1 to 20, characterized in that the diameters of the outlet pipes of the following chambers continuously decrease in size.

**22.** An atomizing apparatus according to one of claims 1 to 21 as a carburettor of an internal combustion engine or as an atomizer of a burner or of a jet engine.

## Revendications

**1.** Dispositif de pulvérisation avec une chambre de turbulence qui comporte un boîtier dont l'enveloppe latérale (2) ou les parois latérales sont pourvues d'au moins deux tubulures (5, 6) dont les axes médians sont espacés de l'axe de boîtier s'étendant sensiblement perpendiculairement à ceux-ci, qui sont inclinés dans le même sens dans une direction périphérique, le boîtier étant fermé, à ses extrémités, par des plaques ou parois frontales (3, 4) qui coupent l'axe de boîtier (10) et une buse d'entrée (13) étant disposée dans l'une (4) des plaques frontales et un tube de sortie (12) étant disposé dans l'autre plaque frontale (3), caractérisé en ce que le tube de sortie débouche sous forme de tube d'entrée (16) dans une chambre centrifuge (15) qui est pourvue sensiblement coaxialement d'un tube de sortie (17), en ce que les extrémités internes (18, 19) des tubes d'entrée et de sortie (16, 17) sont à une certaine distance (a) l'une de l'autre et en ce que les parois de chambre entourent, avec un espacement, la région de ces extrémités intérieures (18, 19) et en ce que la chambre (15) est pourvue, radialement vers l'extérieur des tubes d'entrée et de sortie, d'un tube de sortie ou d'évacuation (20).

**2.** Dispositif de pulvérisation selon la revendication 1, caractérisé en ce que l'enveloppe latérale (2) est conformée cylindriquement.

**3.** Dispositif de pulvérisation selon la revendication 1, caractérisé en ce que l'enveloppe latérale est réalisée en forme de cône et converge vers le tube de sortie (12).

**4.** Dispositif de pulvérisation selon l'une des revendications 1 à 3, caractérisé en ce que les axes médians de la buse d'entrée (13) et du tube de sortie (12) sont alignés avec l'axe de boîtier (10).

**5.** Dispositif de pulvérisation selon l'une des revendications 1 à 4, caractérisé en ce que les tubulures (5, 6) sont réparties suivant des espacements angulaires égaux sur les parois latérales ou l'enveloppe latérale (2).

**6.** Dispositif de pulvérisation selon l'une des revendications 1 à 5, caractérisé en ce que les axes médians des tubulures (5, 6) forment des angles égaux avec des lignes radiales coupant l'axe de boîtier (10).

**7.** Dispositif de pulvérisation selon l'une des revendications 1 à 6, caractérisé en ce que les tubulures (5, 6) traversent l'enveloppe latérale de boîtier (2) sensiblement tangentiellement.

**8.** Dispositif de pulvérisation selon l'une des revendications 1 à 7, caractérisé en ce que les axes médians des tubulures (5, 6) sont situés dans un plan médian commun coupant l'axe de boîtier (10).

9. Dispositif de pulvérisation selon l'une des revendications 1 à 8 , caractérisé en ce que les tubulures (5, 6) débouchent au voisinage de la paroi médiane transversale du boîtier.

10. Dispositif de pulvérisation selon l'une des revendications 1 à 8, caractérisé en ce que les axes médians des tubulures sont situés suivant des lignes transversales mutuellement décalées.

11. Dispositif de pulvérisation selon l'une des revendications 1 à 10, caractérisé en ce que les axes médians des tubulures s'étendent obliquement en direction du tube de sortie (12) et forment,suivant leur projection sur l'axe de boîtier, des angles aigus égaux avec celui-ci.

12. Dispositif de pulvérisation selon l'une des revendications 1 à 11, caractérisé en ce que deux tubulures (5, 6) sont prévues.

13. Dispositif de pulvérisation selon l'une des revendications 1 à 12, caractérisé en ce que les parois de chambre sont réalisées de façon à être symétriquement de révolution autour de leur axe longitudinal aligné avec les axes médians des tubes d'entrée et de sortie.

14. Dispositif de pulvérisation selon l'une des revendications 1 à 13, caractérisé en ce que la section transversale de la chambre (15) avec le plus grand diamètre est située dans la zone entre les extrémités internes (18, 19) des tubes d'entrée et de sortie (16, 17).

15. Dispositif de pulvérisation selon l'une des revendications 1 à 14, caractérisé en ce que le diamètre de la chambre (15) décroît bilatéralement constamment en direction des tubes d'entrée et de sortie à partir de la section transversale à plus grand diamètre.

16. Dispositif de pulvérisation selon l'une des revendications 1 à 15, caractérisé en ce que la sortie (20) se trouve au voisinage de la section transversale, avec le plus grand diamètre, de la chambre (15).

17. Dispositif de pulvérisation selon l'une des revendications 1 à 15 , caractérisé en ce qu'au moins l'un des tubes d'entrée et de sortie (16, 17) est monté de façon axialement déplaçable dans une ouverture de la chambre (15) pour la variation de la distance d'écartement (a) des extrémités intérieures (18, 19) des tubes.

18. Dispositif de pulvérisation selon l'une des revendications 1 à 17, caractérisé en ce que le diamètre du tube d'entrée (16) est plus grand que celui du tube de sortie (17).

19. Dispositif de pulvérisation selon l'une des revendications 1 à 18, caractérisé en ce que la portion extrême du tube d'entrée (16) s'élargit en forme de tuyère.

20. Dispositif de pulvérisation selon l'une des revendications 1 à 19, caractérisé en ce que plusieurs chambres de même type sont disposées les unes derrière les autres et en ce que les tubes de sortie des chambres respectivement précédentes forment les tubes d'entrée des chambres respectivement suivantes.

21. Dispositif de pulvérisation selon la revendication 20, caractérisé en ce que les diamètres des tubes de sortie des chambres suivantes décroissent de façon continue.

22. Dispositif de pulvérisation selon l'une des revendications 1 à 21 formant carburateur d'un moteur à combustion interne ou formant pulvérisateur d'un brûleur ou d'un moteur à réaction.

FIG.1

B

1

7

6

2

3

4

12

10

13

8

5

A

FIG.2

6

2

5

FIG.3

12

FIG.4

13

# FIG.5

# FIG.6

FIG.7

FIG. 8

FIG. 9

EP 0 213 329 B1

FIG.10

54

15

53

16

50

5

6

51

1

13

15

FIG.11

FIG.12

EP 0 213 329 B1

FIG.13

FIG.14

EP 0 213 329 B1